# EUROPEAN PATENT APPLICATION

(11) **EP 4 835 314 A2**
(43) Date of publication of application: **04.11.2026**
(21) Application number: 26185580.3
(22) Date of filing: 17.09.2021
(51) Int. Cl.: F16C 33/20

(54) **ROTARY SCREENING DEVICE WITH BEARINGS**

(30) Priority: 07.10.2020 US 202017064926
(62) Document number(s) of the earlier application(s) in accordance with Art. 76 EPC: 21878707.5 / 4 225 467
(71) Applicant: DUPERON INNOVATION LLC, Saginaw, MI 48601 (US)
(72) Inventor: BLANCHARD, Kenneth, Sanford, 48640 (US); DAYTON, Brandon, Flushing, 48433 (US); DUPERON, Terry, Saginaw, 48601 (US); FUNCHION, Bryce, Tecumseh, 49286 (US); HENNING, Timothy, Kentwood, 49548 (US); TURPIN, Mark, Bay City, 48708 (US)
(74) Representative: Boult Wade Tennant LLP

(57) **Abstract**

Rotary screens used in rotary screening devices for cleaning water in which the prior art trunnion wheels on current state of the art rotary screening devices are substituted by a rocker shoe and a bearing on the rotary screen running on the rocker shoe.

## Description

Be it known that we, Kenneth Blanchard, residing in the City of Sanford, County of Midland, Brandon Dayton, residing in the City of Montrose, County of Genesee, Terry Duperon, residing in the City Saginaw, County of Saginaw, Bryce Funchion, residing in the city of Tecumseh, County of Lenawee, Timothy K. Henning, residing in the City of Grand Rapids, County of Kent, and Mark Turpin, residing in the City of Bay City, County of Bay, all of the State of Michigan and all United States of America citizens, have invented a new and novel

### ROTARY SCREENING DEVICE WITH BEARINGS

for which the following is a specification therefor.

### BACKGROUND OF THE INVENTION

This invention deals with rotary screens used in rotary screening devices for cleaning water.

Such rotary screening devices are also known as Trommel screens. Rotary screening devices are mechanical screening machines used to separate materials, mainly in the mineral and solid-waste processing industries. They consist of a perforated cylindrical drum or mesh screen that is normally elevated at an angle at the feed end.

Physical size separation is achieved as the feed material spirals down the rotating drum or screen, sometimes assisted by augers or conveyors, or the like, where the undersized material smaller than the mesh or apertures passes through the screen, while the oversized material exits at the other end of the drum.

In the wastewater treatment industry, the solids that exit the rotary screen normally are compressed and dewatered as they travel along the conveyor or rotary auger. Most often a post-washing treatment such as a jet wash will be used after the rotary screen to break down fecal matter and unwanted semi-solid matter. The volume of the solids will decrease up to 40% depending on the properties before removal.

Rotary screens come in many designs such as concentric screens, series or parallel arrangement and each component has a few configurations. Rotary screening devices are used by the municipal waste industry in the screening process to classify sizes of solid waste. In addition, rotary screening devices are used for the treatment of water. For this particular application, solids from the entering stream will settle onto the screen mesh and the drum will rotate once the liquid reaches a certain level. The clean area of the screen is submerged into the liquid while the trapped solids fall onto a conveyor or auger which is further processed before removal.

### THE INVENTION

This invention deals with rotary screens used in rotary screening devices for cleaning water in which the prior art trunnion wheels on current state of the art rotary screening devices are substituted by a rocker shoe and a bearing running on the rocker shoe.

Thus, what is disclosed in this specification and claims is a rotary screening device for cleaning water. The rotary screening device comprises a housing, wherein the housing contains a rotary screen. The rotary screen provides separation of particulate solid matter from water.

The rotary screen is powered at a first end by a motor and gear box, while the second end rotates on a rocker shoe. The second end outside surface supports a bearing, wherein the bearing is lubricated by water. The bearing contacts the rocker shoe.

There is a system for delivering water to the bearing while the bearing is in use. The rotary screen further comprises a spray bar for providing cleaning water to the outside surface of the rotary screen.

There is a water system for delivering water to the spray bar and an inlet for supplying and distributing uncleaned water to the interior of the rotary screen. There is a water exit from the housing and a solids outlet from the rotary screen.

### BRIEF DESCRIPTION OF THE DRAWINGS

Figure 1 is a segment end view of a prior art rotary screening device showing the prior art trunnion wheel on one end of the rotary screening device.
Figure 2 is a full side view of one version of the instant invention, a rotary screening device with a bearing.
Figure 3 is a cross-sectional of the device of Figure 2 through line A-A of Figure 2.
Figure 4 is a segment view of the bearing and rocker arm of the instant invention.
Figure 5 is a segment of the bearing showing the spray lubrication.

### DETAILED DESCRIPTION OF THE INVENTION

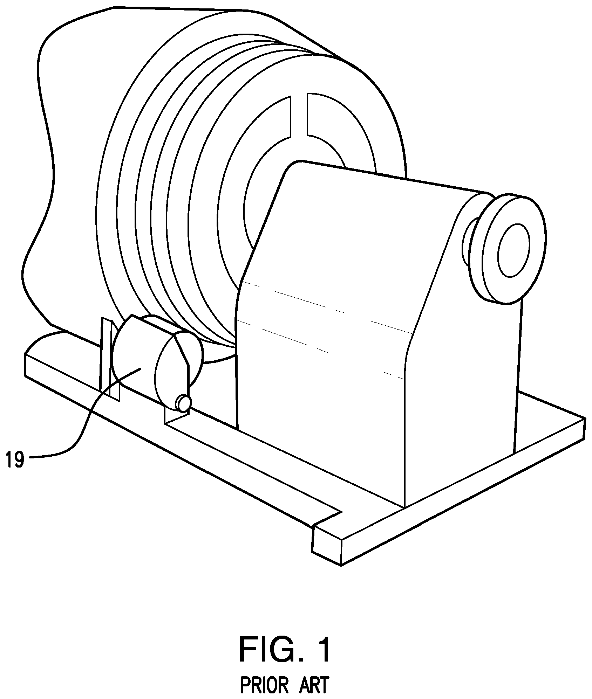

Figure 1 is a segmental view of a prior art rotary screen device in which there is shown the use of trunnion rollers 19. This is shown to indicate the prior art use of such devices in comparison to the instant invention in which the trunnion rollers 19 have been replaced by a rocker shoe and a bearing (described in detail *infra*).

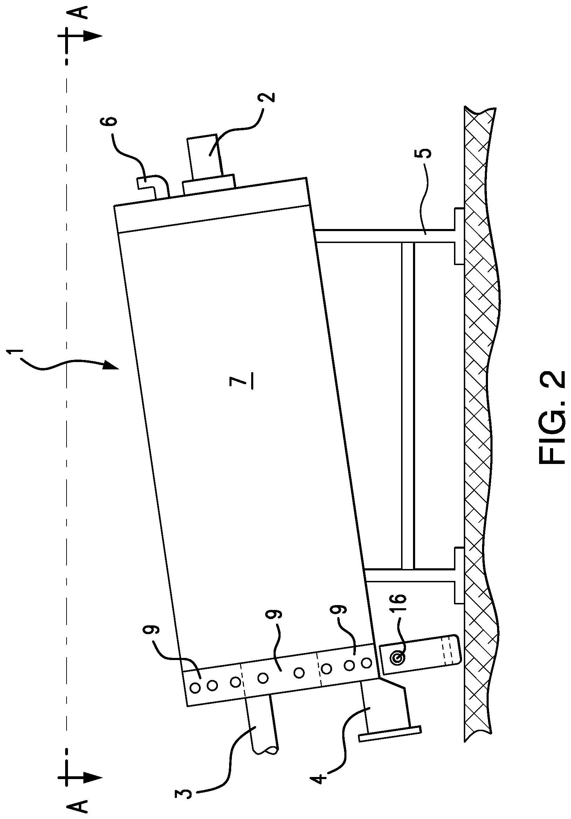

Turning to Figure 2, there is shown a device of this invention which is a rotary screen device 1. It is equipped with a motor and gear box 2, an inlet 3 for the aqueous material to be treated, an outlet 4 for the solids removed from the aqueous media, a support stand 5 for supporting the rotary screen device 1, a clean water inlet 6, a housing 7, and at the lower end of the housing 7 there is shown bearings 9, on the outside surface of the housing 7 and a rocker shoe 10 with a bearing 11 (shown in phantom) near the bottom edge 12 thereof.

It is contemplated with the scope of this invention to manufacture the device 1 such that the inlet 6 is on the opposite end of the housing 7.

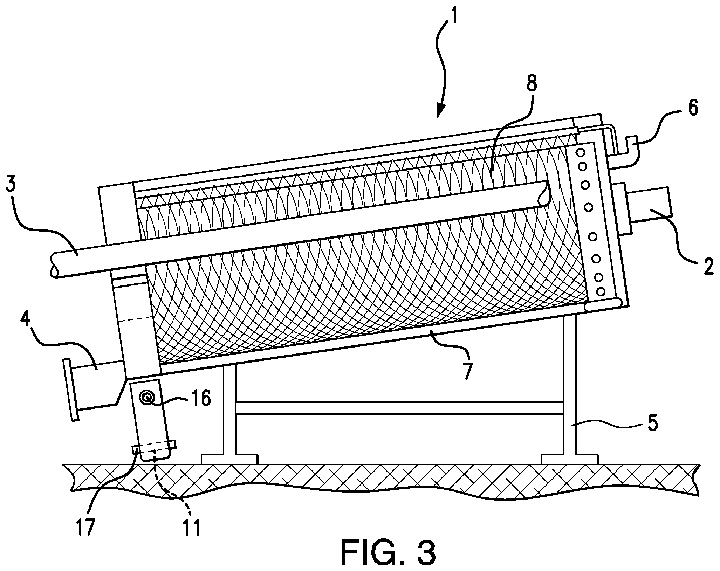

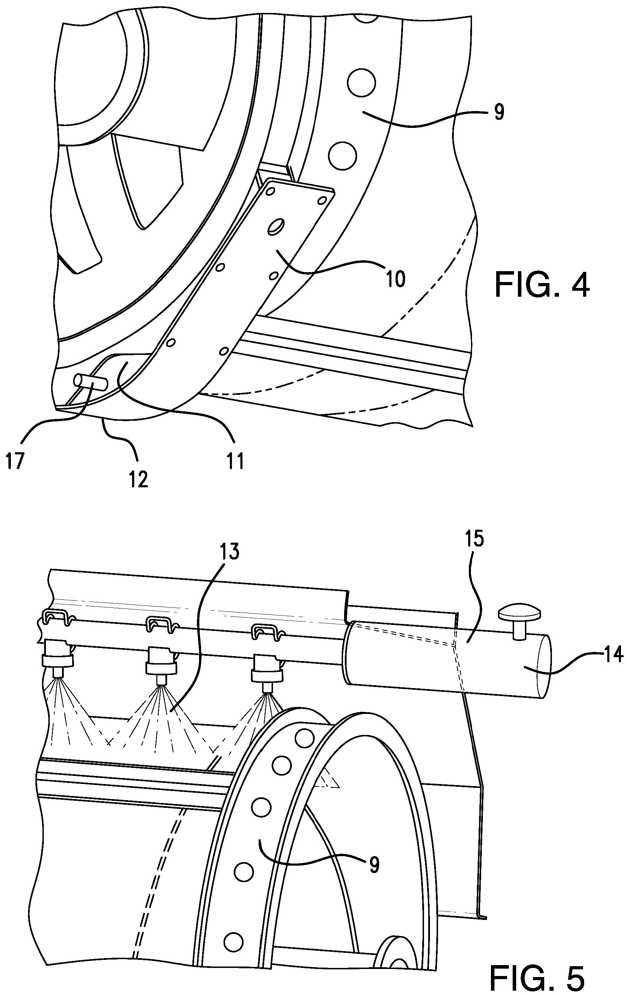

Figure 3 is a cross sectional view through line A-A of Figure 1, showing the additional components of the device 1. There is shown a motor and gear box 2, an inlet 3 for the aqueous material to be treated, an outlet 4 for the solids removed from the aqueous media, a support stand 5 for supporting the rotary screen device 1, a clean water inlet 6, and a housing 7. Also shown is the rotary screen 8 and the rocker shoe 10 along with the bearing 11 near the bottom edge 12 thereof (shown in phantom). The drawings show a narrow gap between the bearing 9 and the rocker shoe 10 for clarity purposes. In working order, the surface of the bearing 9 rides on the inside surface of the rocker shoe 10. See also Figure 4.

The bearing on the rotary screen can be manufactured from plastics, metal, such as stainless steel, ceramics, and the like.

Any plastic used in the plastic bearing can be such materials as Thordon or Vesconite brand bearing materials available from Thordon Bearings Inc. Burlington, Ontario, Canada, ultra-high molecular weight polyethylene, high density polyethylene or c ross-linked polyethylene.

There is a plurality of sprayers 13 located above the roller screen 8 to cleanse the roller screen. Water for this purpose is introduced at the freshwater inlet 14. The detail in the sprayers 14 is shown in Figure 5, wherein there is shown the sprayers 14, the freshwater inlet tube 15, the roller screen 8, and the bearing 9. Shown in Figure 5 is the furnishing of water to the bearing 9, but the bearing 9 is also furnished water as a lubricant at the inlet port 16 shown in Figure 2.

Figure 4 is a detail of the rocker shoe 10 and the bearing 10 along with the bearing 11 and a steel pin 17 to support the bearing 11.

It should be noted that the exact placement of the various components on the rotary screen device is not critical except for the placement of the rocker shoe and the bearing.
The present disclosure may relate to one or more aspects indicated by the following clauses
1. A rotary screening device for cleaning water, said rotary screening device comprising:
   a. a housing, said housing containing,
   b. a rotary screen, said rotary screen providing separation of particulate solid matter from water;
   c. said rotary screen powered at a first end by a motor, said second end rotating on a rocker shoe, said second end outside surface supporting a bearing, said bearing being lubricated by water and contacting said rocker shoe;
   d. a system for delivering said water to said bearing while said bearing is in use;
   e. said rotary screen further comprising a spray bar for providing cleaning water to the outside surface of said rotary screen;
   f. a water system for delivering water to said spray bar;
   g. an inlet for supplying and distributing uncleaned water to the interior of said rotary screen;
   h. a water exit from said housing;
   i. a solids outlet from said rotary screen.
2. In combination, a rocker shoe of a rotary screening device and a bearing on the outside surface of a rotary screen in said rotary screening device.
3. A rotary screening device for cleaning water as claimed in clause 1 wherein the rotary screen bearing is manufactured from plastic.
4. A rotary screening device for cleaning water as claimed in clause 1 wherein the rotary screen bearing is manufactured from ceramic.
5. A rotary screening device for cleaning water as claimed in clause 1 wherein the rotary screen bearing is manufactured from metal.
6. A rotary screening device for cleaning water as claimed in clause 5, wherein the metal is stainless steel.

## Claims

1. In combination, a rocker shoe (10) of a rotary screening device (1) and a bearing (9) on the outside surface of a rotary screen (8) in said rotary screening device (1).

2. A rotary screening device (1) for cleaning water, said rotary screening device (1) comprising:
a housing (7), wherein the housing (7) contains a rotary screen (8), the rotary screen (8) providing separation of particulate solid matter from water;
wherein the rotary screen (8) is powered at a first end by a motor and gear box (2), while a second end rotates on a rocker shoe (10); and
wherein a second end outside surface supports a bearing (9), wherein the bearing (9) is lubricated by water and contacts the rocker shoe (10).

3. A combination according to claim 1, or a rotary screening device (1) according to claim 2, wherein the bearing (9) is manufactured from plastic.

4. A combination according to claim 1, or a rotary screening device (1) according to claim 2, wherein the bearing (9) is manufactured from ceramic.

5. A combination according to claim 1, or a rotary screening device (1) according to claim 2, wherein the bearing (9) is manufactured from metal.

6. A combination or a rotary screening device (1) according to claim 5, wherein the metal is stainless steel.

7. A rotary screening device (1) according to claim 2, wherein the rotary screen (8) comprises a perforated cylindrical drum or mesh screen that is elevated at an angle at a feed end.

8. A rotary screening device (1) according to claim 2, further comprising a plurality of sprayers (13) located above the rotary screen (8) to cleanse the rotary screen (8).

9. A rotary screening device (1) according to claim 2, wherein the rocker shoe (10) comprises an additional bearing (11) and a steel pin (17) to support the additional bearing (11).

10. A rotary screening device (1) according to claim 3, wherein the plastic is selected from ultra-high molecular weight polyethylene, high density polyethylene, or cross-linked polyethylene.

11. A rotary screening device (1) according to claim 2, further comprising a support stand (5) for supporting the rotary screening device (1).

12. A combination according to claim 1, or a rotary screening device (1) according to claim 2, wherein the bearing (9) is furnished water as a lubricant at an inlet port (16).

13. A rotary screening device (1) according to claim 2, further comprising an inlet (3) for aqueous material to be treated, and an outlet (4) for solids removed from aqueous media.

14. A rotary screening device (1) according to claim 2, further comprising a clean water inlet (6), wherein the clean water inlet (6) is on the opposite end of the housing (7).

15. A rotary screening device (1) according to claim 8, further comprising a freshwater inlet (14) and a freshwater inlet tube (15) for introducing water to the plurality of sprayers (13).
